# EUROPEAN PATENT APPLICATION

(11) **EP 1 961 570 A1**
(43) Date of publication of application: **27.08.2008**
(21) Application number: 08100216.4
(22) Date of filing: 08.01.2008
(51) Int. Cl.: B41J 2/045, B41J 2/05

(54) **Print head chip and method of operating a print head chip**

(30) Priority: 23.02.2007 KR 20070018528
(71) Applicant: Samsung Electronics Co., Ltd., Suwon-si, Gyeonggi-do 442-742 (KR)
(72) Inventor: Park, Kyoung Sik, Seoul (KR); Kim, Kyu Sung, Gyeonggi-do (KR)
(74) Representative: Walaski, Jan Filip

(57) **Abstract**

A printer head including a printer head chip to detecting an error, capable of detecting an operation error in the printer head chip while printing is performed during a redundancy period, and a method of controlling the same. The printer head chip includes an input unit to sequentially receive printed data, a counting unit to count discharged data using the printed data and to store the number of discharged data, a generator unit to sum the stored number of discharged data during a redundancy period and to generate resultant information using the summed number of discharged data, and a transmitting unit to transmit the resultant information to a printer head controller.

## Description

The present invention relates generally to printing, to a print head, and more particularly to a print head including a print head chip for detecting an error, capable of detecting an operation error in the print head chip using a redundancy period, and a method of controlling the same.

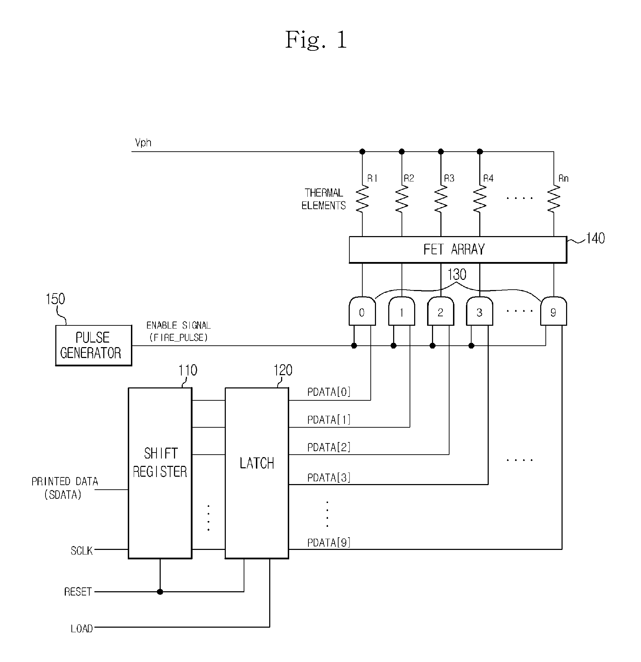

FIG. 1 shows a logic diagram for driving a common printer head chip. A shift register 110 serially receives printed data (data to be printed) SDATA from a printer head controller, stores the serially received printed data SDATA, and transmits the stored printed data SDATA in parallel. A latch 120 receives the printed data SDATA transmitted in parallel, latches the received printed data SDATA, and transmits the latched printed data SDATA to a plurality of AND gates 130.

When an enable signal Fire_Pulse for spraying a toner is input to the AND gates 130 through a pulse generator 150, a field effect transistor (FET) array end 140 of a corresponding nozzle is turned on. When a voltage is applied to a thermal element of the nozzle, a current flows so that ink is discharged to the corresponding nozzle.

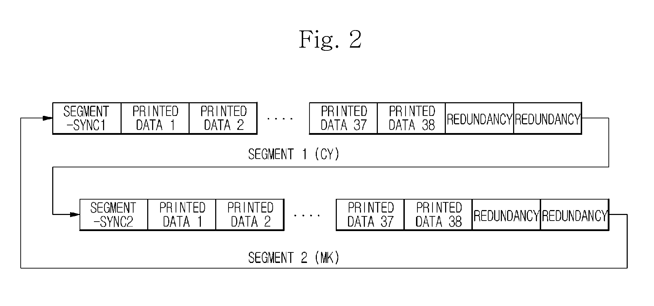

FIG. 2 shows a transmission line of printed data continuously transmitted in a two-colour mode. As shown in FIG. 2, aspects of the present invention are described under the premise that one line is processed by printing of the two-colour mode in which one line is divided by two colours to be processed; however, other aspects of the invention are not so limited.

In an inkjet printer, one line generally includes two segments consisting of 38 items of printed data. The printed data is a group of dot data in which a plurality of dot data is stored. Cyan and yellow printed data is discharged from a first segment, and magenta and black printed data is discharged in a second segment.

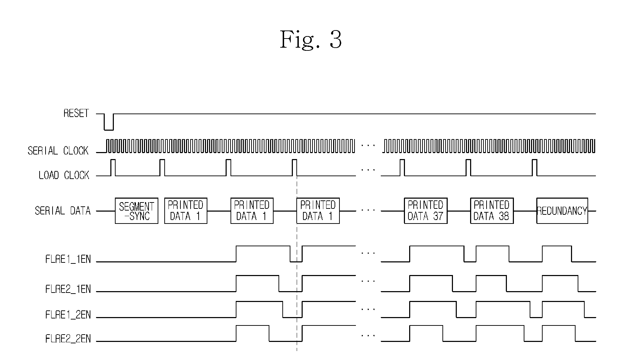

FIG. 3 shows a timing diagram of printed data in one line. When a Load clock is input, printed data 1 are latched and discharged. Printed data 2 in a next stage is received while the printed data 1 is processed as described above. In order to discharge the data of printed data 38 in the final stage, a period for final processing is required without any interface between the printer head controller and the printer head chip. This period is called a redundancy period.

During the redundancy period, no printed data is received. The redundancy period is a way to discharge printed data in a previous stage regardless of an actual operation. The redundancy period is generally necessary for discharging the final printed data. However, since no operations are performed between the printer head controller and the printer head chip, the redundancy period is not used effectively. Therefore, it is necessary to use the redundancy period effectively.

In addition, in the conventional art, the presence of errors in the printer head chip is determined after performing an additional test. However, in the process of detecting the errors in the printer head chip through the additional test, an operation error generated while printing is actually performed is not found.

Aspects of the present invention provide a printer head including a printer head chip for detecting an error and a method of controlling the same, in which the structure of the printer head is improved so that an operation error in the printer head chip is detected while printing is performed using a redundancy period.

According to an aspect of the invention a printer head chip to detect an error is provided. The printer head chip includes an input unit to sequentially receive printed data, a counting unit to count discharged data using the printed data and to store the number of discharged data, a generator unit to sum the stored number of discharged data during a redundancy period and to generate resultant information using the summed number of discharged data, and a transmitting unit to transmit the resultant information to a printer head controller.

According to another aspect of the invention, the number of discharged data includes a number of nozzles from which toner is discharged to print and image and/or a number of nozzles from which the toner is not discharged.

According to another aspect of the invention, the redundancy period is a final point of time at which the printed data is discharged.

According to another aspect of the invention, the generator unit generates the resultant information using operation information on whether a pulse generator that generates an enable signal for discharging the printed data is operating normally.

According to another aspect of the invention, the printer head chip further includes a converting unit to convert the resultant information into a serial format.

According to another aspect of the present invention, a printer head including a printer head chip to detect an error is provided. The printer head includes an input unit to sequentially receive printed data, a counting unit to count discharged data using the printed data and to store the number of discharged data, a generator unit to sum the stored number of discharged data during a redundancy period and to generate resultant information using the summed number of discharged data, and a printer head controller to receive the resultant information transmitted from the printer head chip and to compare the resultant information with previously stored printed information so as to determine whether an error has occurred.

According to another aspect of the present invention, a method of controlling a printer head including a printer head chip to detect an error is provided. The method includes sequentially receiving printed data, counting discharged data using the printed data, storing the number of discharged data, summing the stored number of discharged data during a redundancy period to generate resultant information using the summed number of discharged data, transmitting the resultant information to a printer head controller, and comparing the received resultant information with previously stored printed information so as to determine whether an error has occurred.

According to another aspect of the present invention, the summing of the stored number of discharged data comprises generating the resultant information using operation information on whether a pulse generator that generates an enable signal to discharge the printed data is operating normally.

Additional aspects and/or advantages of the invention will be set forth in part in the description which follows and, in part, will be obvious from the description, or may be learned by practice of the invention.

These and/or other aspects and advantages of the invention will become apparent and more readily appreciated from the following description of the embodiments, taken in conjunction with the accompanying drawings, in which:
FIG. 1 illustrates a logic diagram for driving a common printer head chip;
FIG. 2 illustrates a transmission line of printed data continuously transmitted in a two-colour mode;
FIG. 3 illustrates a timing diagram of printed data in one line;
FIG. 4 illustrates a logic diagram for driving a printer head including a printer head chip for detecting an error according to an embodiment of the present invention;
FIG. 5 illustrates a timing diagram of a discharged data in one line according to an embodiment of the present invention; and
FIG. 6 is a flowchart illustrating the process of controlling the printer head including the printer head chip for detecting the error according to an embodiment of the present invention.

Reference will now be made in detail to the present embodiments of the present invention, examples of which are illustrated in the accompanying drawings, wherein like reference numerals refer to the like elements throughout. The embodiments are described below in order to explain the present invention by referring to the figures.

The terms 'printer head' and 'print head' are used interchangeably in this application.

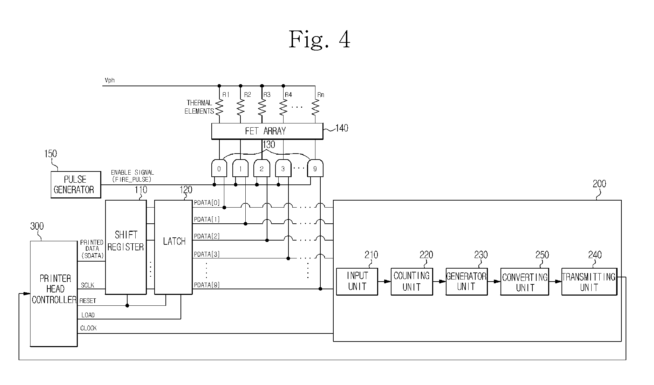

FIG. 4 shows a logic diagram for driving a printer head including a printer head chip to detect an error according to an embodiment of the present invention. The printer head chip 200 includes an input unit 210, a counting unit 220, a generator unit 230, and a transmitting unit 240. According to other aspects of the invention, the printer head chip 200 may include additional and/or different units. Similarly, the functionality of two or more of the above units may be integrated into a single component. The same elements as the conventional elements are denoted by the reference numerals used in FIG. 1.

The shift register 110 receives and stores serial printed data SDATA from a printer head controller 300 to transmit the stored printed data SDATA in parallel. The latch 120 receives and latches the printed data SDATA transmitted in parallel and the transmitted printed data SDATA are applied to the plurality of AND gates 130.

When an enable signal Fire_Pulse for spraying a toner is input from the pulse generator 150 to the AND gates 130, the field effect transistor (FET) array end 140 of a corresponding nozzle is turned on. When a voltage is applied to a thermal element of a nozzle, a current flows so that ink is discharged to the corresponding nozzle. The ink is transferred to a printable medium so as to form an image corresponding to the printed data onto the printable medium.

When the printer head chip converts the serial printed data SDATA into parallel printed data SDATA, the printed data has information on discharged data, also referred to as discharge. The input unit 210 sequentially receives the printed data SDATA transmitted from the printer head controller 300. The counting unit 220 counts the discharged data using the input printed data and stores the number of discharged data. The number of discharged data may include the number of nozzles from which a toner is discharged for performing printing and/or the number of nozzles from which the toner is not discharged.

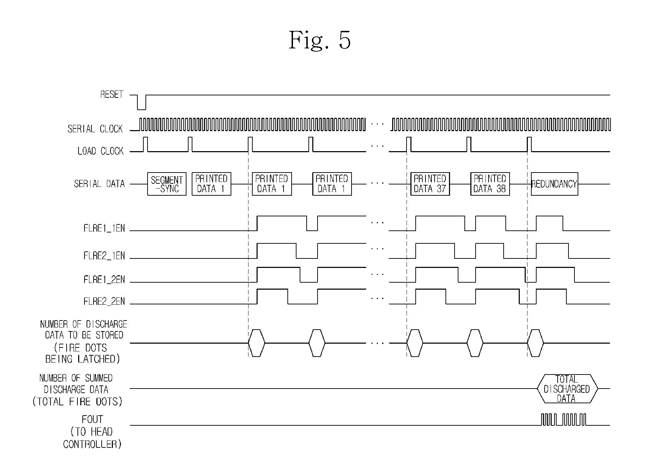

FIG. 5 shows a timing diagram of discharged data in one line according to an embodiment of the present invention. As described above, the counting unit 220 counts the number of nozzles from which a toner is sprayed to perform printing among the printed data received from the printer head controller 300 and/or the number of nozzles from which the toner is not sprayed for performing printing among the printed data received from the printer head controller 300.

The generator unit 230 sums the number of stored discharged data during a redundancy period and generates resultant information using the number of total discharged data. The redundancy period is the final point of time at which the printed data is discharged. As shown in FIG. 5, a Load clock is input, the printed data is latched, the number of discharged data is counted and stored, and the number of discharged data that is stored as described above is summed in the redundancy period. The resultant information is generated using the number of total discharged data.

Fire1_1En denotes a pulse indicating the value of a current. The number of discharged data is counted using the pulse. Fire1_1En, Fire2_1En, Fire1_2En, and Fire2_2En are kinds of pulses and denote pulses output according to various embodiments of the present invention.

A process of counting the number of discharged data using the above pulses will be described. Since the pulse Fire1_1En is longer than the pulse Fire2_1En in a period where a pulse starts, the number of discharged data corresponding to the pulse Fire1_1En is larger than the number of discharged data corresponding to the pulse Fire2_1En. The number of discharged data is calculated as described above.

The generator unit 230 may generate the resultant information using information on whether a pulse generator 150 that generates an enable signal is operating normally in order to discharge the printed data. The generator unit 230 generates the resultant information using the information on whether the enable signal for discharging the printed data to the outside is operating normally by a previously set time value.

After generating the resultant information, the transmitting unit 240 transmits the generated resultant information to the printer head controller 300. The transmitting unit 240 transmits the generated resultant information to the printer head controller 300 again through a terminal connected to the printer head controller 300 so that it is possible to know whether the printed data received from the printer head controller 300 was transmitted to the printer head chip without loss and to determine whether the data processing processes of the printer head chip are erroneous.

Before transmitting the resultant information to the printer head controller 300, a converting unit 250 converts the resultant information into a serial format. The converting unit 250 converts the resultant information into the serial format in order to transmit the resultant information to the printer head controller 300 through an additional pin connected to the printer head chip or a pin used for testing the printer head chip.

The printer head controller 300 receives the resultant information transmitted from the printer head chip so as to compare the resultant information with previously stored printed information. Since the printer head controller 300 knows the printed information transmitted to the printer head chip, the printer head controller 300 receives the resultant information from the transmitting unit 240 of the printer head chip and compares the two information items with each other to determine whether an operation error exists in the printer head chip.

In a conventional art, it is possible to check the operation error in the printer head chip only through a test mode. However, according to aspects of the present invention, since it is possible to check for operation errors in the printer head chip in the redundancy period during the printing process, it is possible to check the printer head chip in real time.

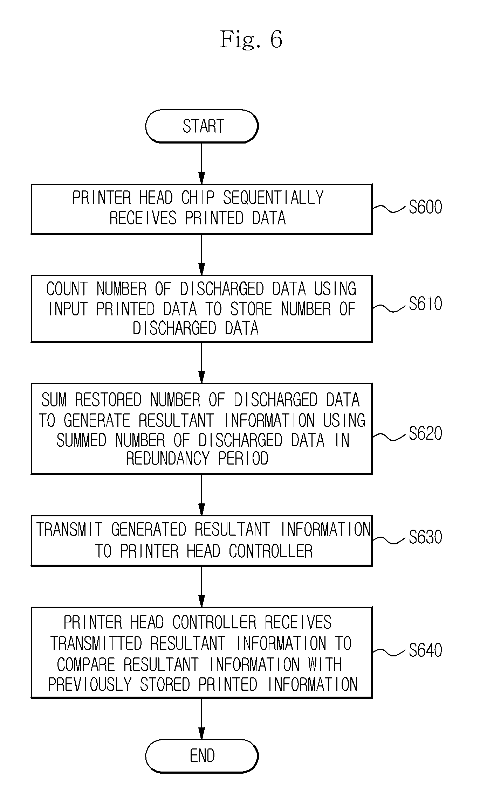

Hereinafter, processes of controlling the printer head including the printer head chip for detecting the error will be described. FIG. 6 is a flowchart showing processes of controlling the printer head including the printer head chip for detecting the error according to an embodiment of the present invention. In operation S600, printed data is sequentially received from the printer head chip 200. The number of discharged data is counted using the input printed data to be stored in operation S610. The number of discharged data may include the number of nozzles from which a toner is discharged to print the image and/or the number of nozzles from which the toner is not discharged.

During the redundancy period, the stored number of discharged data is summed and resultant information is generated using the summed number of discharged data in operation S620. The redundancy period may be the final point of time at which the printed data are discharged. The resultant information may be generated using operation information on whether a pulse generator that generates an enable signal for discharging the printed data to the outside is operating normally.

The generated resultant information is transmitted to a printer head controller in operation S630. The printer head controller receives the transmitted resultant information to compare the resultant information with previously stored printed information in operation S640.

As described above, in the printer head including the printer head chip for detecting the error according to aspects of the present invention and the method of controlling the same, it is possible to effectively use the redundancy period where no interface is generated between the printer head controller and the printer head chip.

In addition, since it is possible to determine whether the printed data of the printer head chip is processed normally or to determine whether an operation error exists in the printer head chip using the redundancy period while the printing is performed without an additional test, it is possible to check the printer head chip in real time.

Although a few embodiments of the present invention have been shown and described, it would be appreciated by those skilled in the art that changes may be made in this embodiment without departing from the principles of the invention, the scope of which is defined in the claims.

## Claims

1. A print head chip (200) for a print head that has a print head controller (300), comprising:
means (210) for receiving a plurality of items of discharge data from the print head controller, each item comprising ink discharge information;
means (220, 230) for determining a total number of discharge data items to provide error check information; and
means (240) for transmitting the error check information to the print head controller (300) for determining errors in print head operation.

2. A print head chip according to claim 1, comprising:
an input unit (210) to sequentially receive the plurality of discharge data items;
a counting unit (220) to count the discharge data items and to store the number of discharge data items;
a generator unit (230) to sum the stored number of discharge data items during a redundancy period when discharge data is not received from the print head controller and to generate the error check information using the summed data; and
a transmitting unit (240) to transmit the error check information.

3. The print head chip according to claim 1 or 2, wherein the number of discharge data items comprises a number of nozzles from which ink is discharged to print an image and/or a number of nozzles from which ink is not discharged.

4. The print head chip according to claim 1, 2 or 3, wherein the means (220, 230) for determining a total number of discharge data items is arranged to receive operation information as to whether a pulse generator (150) that generates an enable signal for discharging the discharge data is operating normally.

5. The print head chip according to any one of the preceding claims, further comprising a converting unit (250) for converting the error check information into a serial format prior to transmission.

6. A print head comprising:
a print head chip according to any one of the preceding claims; and
a print head controller for receiving the error check information transmitted from the print head chip and for comparing the error check information with previously stored information relating to data to be printed.

7. The print head according to claim 6, wherein the print head controller is arranged to compare the data to be printed with the error check information during a redundancy period, in which no data to be printed is transmitted by the print head controller to the print head chip.

8. An image forming apparatus comprising a print head according to claim 6 or 7 for forming an image onto a printable medium, the print head further comprising:
a plurality of nozzles for transferring ink onto the printable medium based on print data so as to form an image on the printable medium;
wherein the print head controller is arranged to transmit the print data to the nozzles and to the print head chip as the discharge data, and to determine whether an error exists in the print head based on the print data and the received error check information.

9. A method of operating a print head chip (200) for a print head that has a print head controller (300), comprising:
receiving a plurality of items of discharge data from the print head controller, each item comprising ink discharge information;
determining a total number of discharge data items to provide error check information; and
transmitting the error check information to the print head controller (300) for determining errors in print head operation.

10. A method according to claim 9, comprising:
sequentially receiving discharge data;
counting the number of discharge data items;
storing the number of discharge data items;
summing the stored number of discharge data items during a redundancy period in which no discharge data is transmitted by the print head controller, to generate the error check information;
transmitting the error check information to the print head controller; and
comparing the received error check information with previously stored information relating to data to be printed.

11. The method according to claim 9 or 10, where the number of discharge data items comprises a number of nozzles from which ink is discharged to print an image and/or a number of nozzles from which the ink is not discharged.

12. The method as claimed in claim 9, 10 or 11 wherein determining a total number of discharge data items comprises generating the error check information using operation information on whether a pulse generator that generates an enable signal to discharge the printed data is operating normally.
